# EUROPEAN PATENT APPLICATION

(11) **EP 4 450 653 A1**
(43) Date of publication of application: **23.10.2024**
(21) Application number: 23168745.0
(22) Date of filing: 19.04.2023
(51) Int. Cl.: C21D 7/06, B21D 13/00, B21D 26/06, B21D 31/06, B23K 26/00, C21D 10/00, C22F 3/00, G05B 19/00

(54) **METHOD AND WORKING STATION FOR PEENING FORMING TREATMENT**

(71) Applicant: Airbus Operations GmbH, 21129 Hamburg (DE); AIRBUS OPERATIONS (S.A.S.), 31060 Toulouse (FR)
(72) Inventor: Furfari, Domenico, 21129 Hamburg (DE); Pacchione, Marco, 21129 Hamburg (DE); van der Veen, Sjoerd, 31060 Toulouse (FR)
(74) Representative: Marschall, Stefan

(57) **Abstract**

Disclosed is a method for forming shapes and contours at least in a section of a metal part via a peening forming treatment, wherein in a closed loop the part can be formed fully automatically, including an overall evaluation of the treated (formed) part and loops for redefining the treatment process, if design requirements are not met after the forming. Before starting the treatment on the real part, a peening forming treatment profile (peening treatment strategy) is established via simulation on a digital twin of the part to be formed. Further disclosed is a working station for executing the method.

## Description

The present invention relates to a method for forming shapes and contours at least in a section of a metal part via peening forming process (treatment), and a working station for executing such method.

Forming shapes or contours in a metal part (component) or a correction of deformation for metallic components of aircraft is a common practice in aerospace industries. Forming a metal part to a nominal shape within the tolerances for assembling the part into a whole aircraft structure requires extensive tooling, expensive machines and additional process in a step by step fashion always controlled by manual operation.

Current airframe and fuselage structures, including wing and tail structures of commercial aircraft, are typically built from panels which are shaped by means of complex and large specialized equipment. In commercial aircraft, fuselage skins are currently manufactured to the final aerodynamic shapes using large hydraulic machines that stretch the materials and wrap it around a large mould that represents the shape of the part to be formed.

Other large components having small curvature and complex aerodynamic shapes such as wing panels are produced by means of peening forming technology. The peening forming technology can be a classical one using mechanic shot materials or a laser shock peening technology using laser energy to generate deep compressive stress to the part to be formed. Laser shock peening treatment for forming is already an established technology for special applications such as wing covers where the classic shot peening treatment does not deliver sufficient energy levels to deform thick parts. The laser shock peening treatment per se is described in the patent US 6,410,884 B1.

All aforementioned methods are in common that they and are manual or semi-automatic time consuming processes, in particular if a target shape or contour is not meet directly.

The object of the present invention is to provide an improved method and a working station for forming complex 3D geometry.

The object is solved by a method with the features of claim 1 and by a working station with the features of claim 7. Advantageous embodiments are disclosed in the dependent claims, the description, and the drawings.

According to an inventive method for forming shapes and contours at least in a section of a metal part via a peening forming treatment, the following steps are executed:
a. Providing a metal part to be formed,
b. Defining a target geometry of the part;
c. Modelling residual stress profiles and surface map of the part based on its real geometry and its target geometry;
d. Defining treatment parameters via a digital twin of the part wherein the residual stress profiles and the surface map are translated into a peening forming treatment profile based on a simulated response of the part on the peening forming treatment;
e. Executing the peening forming treatment on the real part;
f. Measuring the achieved real geometry of the formed part.
g. Comparing the achieved real geometry of the formed part with its target geometry, wherein the method restarts at step c) if a deviation between the real geometry and the target geometry exceeds a tolerance range.

The method is so called close loop method that, preferably, runs fully automized. A manual process monitoring is not necessary as the system monitors itself by measuring the achieved real geometry of the formed part and the following comparison with the target geometry. The decision if the target geometry is met, including a self-modified peening loop, is done automatically based on a given tolerance range. The simulation of the peening forming treatment on the digital twin is used for the iterative modelling of the part if deviation between current geometry and target geometry exceeds the tolerance range.

Even the positioning part to be formed in the working station can be done automatically. The geometric data for the target geometry and an acceptable tolerance range are provided by the CAD-Modell of the part. The parameters such as beam energy and beam overlap are given by the peening forming treatment itself. Further parameters such as surface condition (ablative coating) and boundary (clamping) conditions are provided by the CAD-Modell as well. The human operator will only be informed at the end of the method, if the achieved geometry of the part meets the geometrical requirements and the formed part is, preferably, released automatically from the station and moved to a next station for further processing. As the forming is done by a peening forming treatment, large hydraulic machines are not necessary.

In other words, the key feature of the new production process is the execution of a closed loop iteration of more peening sequences to achieve the final target shape which is measured from an online monitoring/metrology system. Enabler of this production approach method is the automatic definition of the peening strategy to bring the geometry of the part from the current measured geometry to the target final shape. The peening strategy will be established by means of real time simulation of the component response to the laser peening. Inaccuracy in the response of the real part during the peening operation is mitigated with additional peening loops until the deviation to the target geometry is within the tolerance defined for the specific component. A first step of the implementation of the invention consists with the prediction modelling, capable of establishing the peening surface map on the target component to generate the required residual stress profiles into the material component to be shaped. This residual stress will be translated with a fully integrated digital twin system into a "Peening Forming Strategy" consisting of peening parameters (beam energy, spot size and spot overlap), surface condition (water confinement, ablative coating) and boundary (clamping) conditions. The peening forming process starts according to the peening strategy established as per the steps above and will be realized with hardware setup consisting of peening forming equipment and a robot control unit to address the required treatment beams into the target and, as consequence, residual stresses are created inside the material of the part being shaped. A full automatic measurement/metrology system will measure the actually achieved geometry and if the metrology shows a delta vs. the final geometry of the part a new run of prediction modelling will be initiated, a new peening strategy will be created, and the peening process repeated until convergence to the desired geometry is achieved. The iteration will be terminated when the accuracy established by the tolerances according to the nominal shape established by the component drawings is met.

Exemplary, but no limited parts are airframe and fuselage structures of aircrafts, including wing and tail structures, wing panels, wing covers, skins. For instance, the method is also suitable for use in fabrication of an airframe or fuselage structure of a spacecraft, body structure of other vehicles, such as trains, automobiles, trucks or ships. The inventive method is applicable for forming large, medium and small sized metal parts, in particular for forming metal parts having small curvature such as wing skins and fuselage skins.

Preferably, the peening forming treatment is a laser shock peening treatment. Laser shock peening treatment does not need any mechanical forming material compared to conventional (classical) shot peening treatment. Laser shock peening parameters are for instance laser energy, spot size and a spot overlap. A further laser shock peening parameter is surface condition such as water confinement. In this case, a Laser Peening Strategy (profile) is established. An alternatively peening forming treatment is a conventional shot peening forming treatment using mechanical shot materials. However, according to the understanding of the invention, the conventional shot peening treatment also creates a beam which is directed to and moved over the part's surface for forming purposes.

It is further preferred, when the measuring is done optically, this means contactless, for instance by a laser system. Optical measuring is very precious and does not suffer from any wear. It is almost maintenance-free, thus supporting the fully automatic approach.

In one embodiment, the part to be formed is positioned on a mould with a specific outer contour.

In another embodiment, the part is positioned in a free-floating manner. The positioning can be vertically, horizontally or in an inclined manner. By means of this, no mould is necessary.

In particular, if the part to be formed is hold in a free-floating manner, it can be treated from opposite sides. This enables very complex shapes and contours.

According to the invention, an inventive working station for forming shapes and contours in metal part via a peening forming treatment, comprises
- a holding device that is capable of holding the part in a desired position during the treatment;
- a peening forming system that is capable of applying a peening forming treatment to the part; and a
- a measuring system that is capable of measuring an overall part geometry.
- The systems are adapted to be moved at least partially relatively to each other such that the part can be formed and its geometry can be measured.

Preferably, the peening forming system is a robotic laser shock peening system having at least one robot. The at least one robot (its manipulator) holds a laser beam outlet. The laser light source can be located apart from the manipulator. In this case, the laser light can be transferred by mirrors or by an optical cable to the at least one laser beam outlet.

It is further preferred, when the measuring system is an optical measuring system such as a laser measurement system. The measuring system (metrology system) is used to measure the overall deformed plate shape and feed measurements into the closed loop process iteratively.

According to one embodiment, at least one laser beam outlet of the peening forming system is movable at least in two directions including rotations. By means of this, the holding device for the part can be fixed, as the at least one laser beam outlet can be moved for instance in a horizontal plane in longitudinal direction (x-direction) and in transversal direction (y-direction) relative to the part to be formed. In combination with the movable at least one manipulator, every surface area of the part to be formed can be reached and treated.

In an alternative embodiment, at least one laser beam outlet of the peening forming system is movable only in a first direction, including rotations, and the holding device is movably in second direction in the same plane as the first direction. For instance, the least one laser beam outlet of the peening forming system is movable in transversal direction (y-direction) of the part to be formed and the holding device is movable in longitudinal direction (x-direction) of the part to be formed.

Preferably, the holding device is a mould adapted to carry the part to be formed.

Alternatively, the holding device is adapted to hold the part in a free-floating manner. Such holding device enables to apply the peening forming treatment from opposite sides to the part as it is clamped only in some surface regions and both sides are free accessible.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure. Shown is schematically in
- Fig. 1:: a flow chart of a preferred embodiment of the method according to the invention;
- Fig. 2:: a first preferred embodiment of the working station according to the invention;
- Fig. 3:: a detailed view of second preferred embodiment of the working station according to the invention;
- Fig. 4:: a perspective view of a third preferred embodiment of the working station according to the invention;
- Fig. 5:: a front view of the third preferred embodiment shown in figure 4;
- Fig. 6:: a perspective view of a fourth preferred embodiment of the working station according to the invention; and
- Fig. 7:: a front view of the fourth preferred embodiment shown in figure 4.

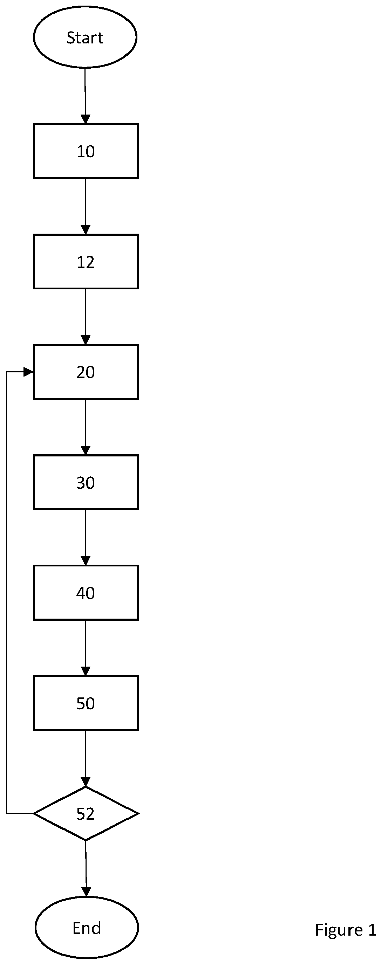

In Figure 1 shows a flow chart of a preferred embodiment of the method for forming shapes and contours at least in a section of a metal part via a peening forming treatment according to the invention.

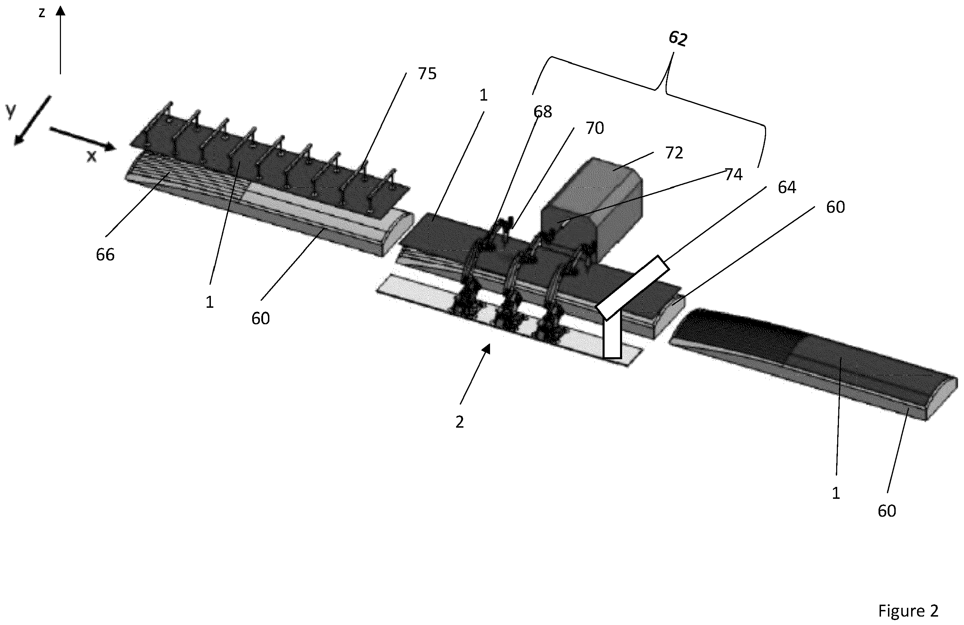

First, a metal part 1, illustrated in Figures 2 to 7, to be formed is provided (step 10).

Then, a target geometry of the part 1 is defined (step 12).

After that, residual stress profiles and a surface map of the part 1 based on its real geometry and its target geometry is modelled (step 20). Thus, a Laser Peening Forming Strategy Modell is created.

Then, a "Laser Peening Strategy" is established. Here, treatment parameters are defined via a digital twin of the part, wherein the residual stress profiles and the surface map are translated into a peening forming treatment profile based on a numerical simulated response of the part on the laser shock treatment (step 30). Exemplary peening forming treatment parameters are laser energy, spot size, spot overlap, surface conditions such as water confinement and ablative coating, and boundary conditions such as clamping. In other words, the residual stress will be translated with a fully integrated digital twin system into a "Laser Peening Strategy" consisting of peening parameters (energy, spot size and overlap), surface condition water confinement, ablative coating) and boundary (clamping) conditions.

Then, the method proceeds with the laser shock peening treatment on the real part 1 (step 40). It should be noted that instead of laser shock peening treatment, also conventional shot peening is applicable. Consequently, the treatment parameters have to modified then accordingly.

After the part 1 forming (step 40), the achieved real geometry of the formed (treated) part is measured (step 50). For this, the achieved real geometry is measured overall optically by a laser measurement system.

Then, the measured achieved real geometry is evaluated and compared with the target geometry of the part 1 (step 52).

If a deviation between the real geometry and the target geometry exceeds a tolerance range, the method restarts with the modelling of a residual stress profile of the part based on its achieved real geometry and its target geometry (step 20).

This iterative loop is done as often until the achieved real geometry is within the tolerance range.

If the achieved geometry is within in the tolerance range, the part 1 has been formed as defined by design requirements and the method will be terminated.

The whole method runs automatically. The laser peening forming brings the advantage of a contact-less process (no need of full support of the component to be formed), fully computer controlled (no human operator necessary), that together with a digital monitoring/metrology system create the technical infrastructure for the implementation of the fully automatized forming station. Even the part to be formed can be positioned fully automatized in a working station 2, 4, 6, 8 illustrated in Figures 2 to 7. Preferably, the part to be formed is positioned in the working station 2 only after the simulation succeeds, because positioning and clamping of the part 1 can have an influence on the laser shock peening process, for instance.

An initial geometry of the part 1 to be formed as well as the target geometry are provided by a CAD-System.

All laser shock peening parameters are given by the CAD-System as well. The laser shock peening parameters as well as the tolerance ranges can vary from part 1 to part due to different materials, different initial and target shapes and contours, sizes, etc..

The decisions, if a deviation is acceptable or not, is done fully automatically, as the tolerance ranges are given by the CAD-System.

The measuring of the achieved real geometry is done fully automatized by the laser measurement (metrology) system. The achieved real geometry is introduced in the CAD-System, so that the comparison of the achieved real geometry with the target geometry is also executed fully automized.

In Figure 2, a first embodiment 2 of an inventive working station for forming shapes and contours in metal part via a laser shock peening treatment is shown.

The working station 2 has a holding device 60 for holding the part 1 in a desired position during the treatment, a laser shock peening system 62 for orientating laser beams on the part 1 for the treatment, and a laser measuring system 64 for measuring an overall part 1 geometry after every laser shock peening treatment.

In the shown embodiment, the holding device 60 is a mould on which the part 1 can be laid down. The mould 62 is fixed and cannot be moved. Preferably, the mould 60 has an upper surface 66 providing shapes and contours. However, due to the laser shock peening treatment, the provided shapes and contours can vary from the desired shapes and contours in such a way that the part 1 can be formed partially to an extend without any direct contact between its lower surface and the upper surface 66 of the mould 60.

The laser shock peening system 62 comprises several robots 68, in particular several manipulators. Here, three robots 68 are shown. The robots 68 are positioned side by side at one side of the mould 62 and are equipped each with a laser beam outlet 70 of the laser shock peening system. Further on, the laser shock peening system 62 comprises a laser light source 72 generating the laser beams. Here, it is positioned opposite to the robots 68. Preferably, the laser light is transferred from its source to the laser beam outlets 70 via optical cable 74 a gimbal mirrors.

The robots 68 are movable in are horizontal plane and adapted to rotate about their vertical axis (z-direction) that extends orthogonally from the horizontal plane. In particular, the manipulators and thus the laser beam outlets 70 can be moved in longitudinal direction (x-direction) along the mould 60, and be moved in transversal direction (y-direction) of the mould 60. Thus, every area of the part 1 to be formed can be reached and treated, although the mould 62 itself is fixed.

The laser measuring system 64 is a laser scanner, for instance a line scanner, that is adapted to reach every area of the achieved real geometry of the part 1. It can have the same movement capacity as the robots 62. In particular it can be attached to the manipulators directly. If the laser monitoring system 64 is a line scanner, it is preferred if the laser line extends in transverse direction (y-direction) over the part 1 and has such a length that the entire extension of the part 1 in y-direction can be reached. The benefit of such an orientation would be that the laser scanner 64 only has to be moved in x-direction in order to scan overall the part geometry.

For the sake of completeness, on the lefthand side of Figure 2 it is shown how the part 1 to be formed is laid down on the mould 60 automatically by a plurality (vacuum) grippers 75, for instance. Further on, on the righthand side of Figure 2 the part 1 having its achieved real geometry after the treatment is shown.

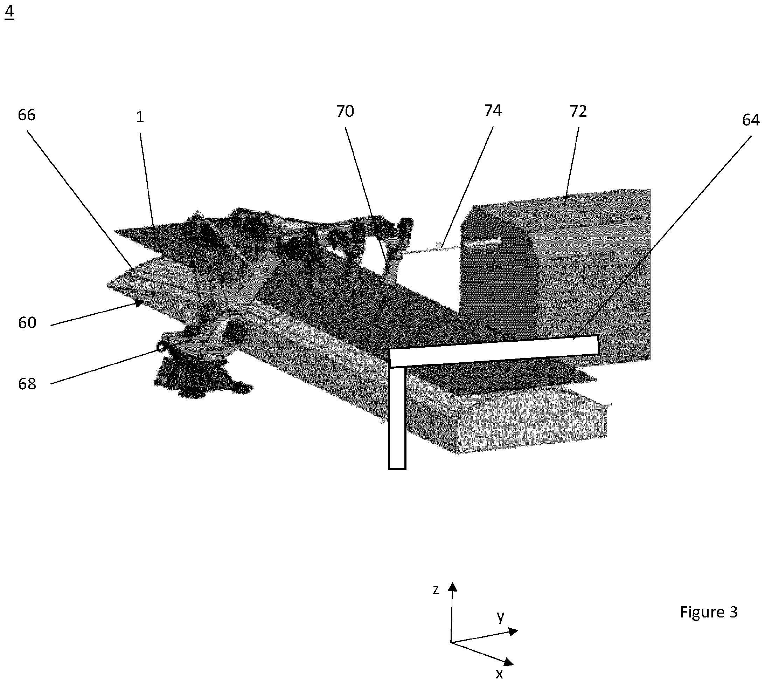

In Figure 3, a detailed view of a second embodiment 4 of an inventive working station for forming shapes and contours in metal part via a laser shock peening treatment is shown.

In difference to the first embodiment shown in Figure 1, only one robot 68 is provided. In Figure 3, the manipulator of the robot 68 is shown in different position for illustrative purposes. The robot 68 (its manipulator) is only movable in transversal direction (y-direction) and rotatable in its vertical direction (z-direction). The robot 68 is fixed in x-direction. In order to treat the part 1 over its entire length (x-direction), the mould 62 is movable in its longitudinal direction (x-direction).

All other features of the second embodiment 4 of the working station are the same as the features of the first embodiment 2 of the working shown in Figure 2.

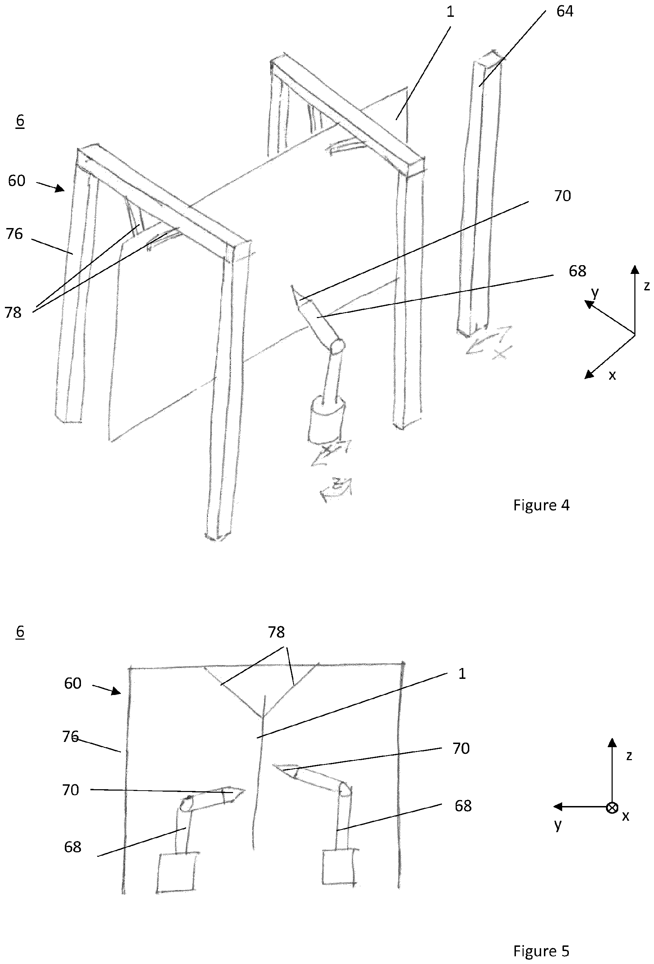

In Figures 4 and 5, a third embodiment 6 of an inventive working station for forming shapes and contours in metal part via a laser shock peening treatment is shown.

Contrary to the aforementioned working stations 2, 4, the third embodiment 6 shows a free-floating positioning of a part 1 to be formed in a holding device 60. Thus, a mould for laying down the part 1 not necessary. The holding device 60 has a support structure 76 carrying the part 1 in vertical orientation by gripper means 78 for instance pairs of vacuum gripper means.

At least one robot 68 of a laser shock peening system 62 carrying a laser beam outlet 70 is positioned on one side of the part 1. However, as shown in figure 5, robots 68 can be positioned on both sides of the part 1, thus enabling a laser shock peening treatment from both sides. The robot(s) 68 are relatively movable to the carried part 1 such that every area of the part 1 can be reached by the laser beam in an adequate manner. Examples of the robot movements and rotations are mentioned in figure 2.

Further on, a laser measuring system 64 is shown in Figure 5. The laser measuring system 64 can be moved relatively to the carried part 1 such that that every area of the part 1 can be scanned.

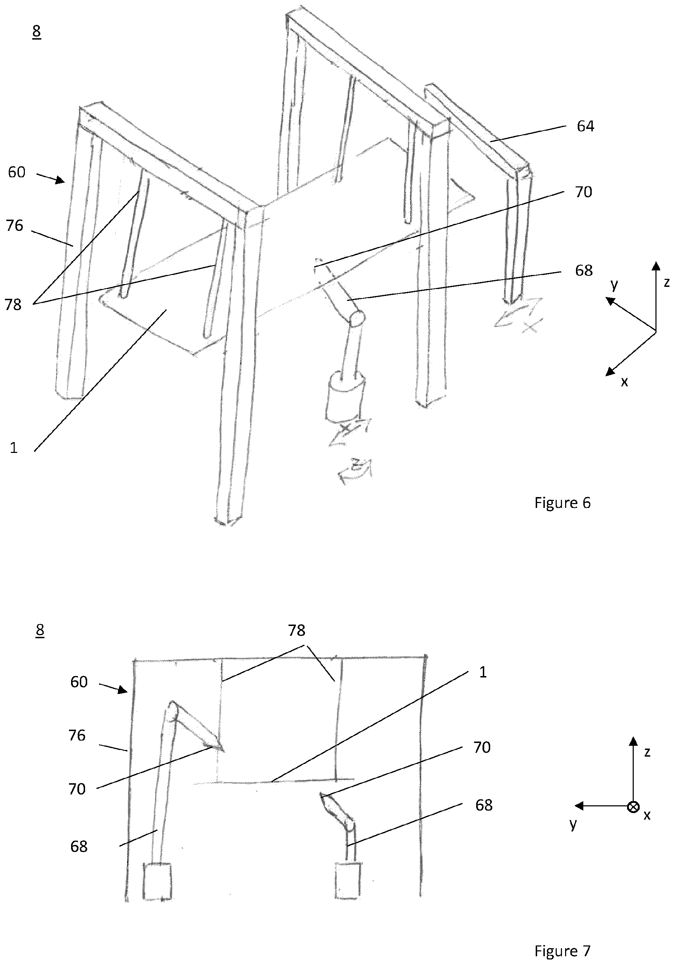

In Figures 6 and 7, a fourth embodiment 8 of an inventive working station for forming shapes and contours in metal part via a laser shock peening treatment is shown.

Contrary to the aforementioned fourth embodiment 6 of a working station, the fourth embodiment 8 shows a free-floating positioning of a part 1 to be formed in a horizontal orientation in a holding device 60. Thus, a mould for laying down the part 1 also not necessary. The holding device 60 has a support structure 76 carrying the part 1 in horizontal orientation by gripper means 78 for instance pairs of vacuum gripper means.

At least one robot 68 of a laser shock peening system 62 can position its laser beam outlet 70 below the part 1. However, as shown in figure 5, a robot 68 can also be provided which is capable of positioning its laser beam outlet 70 over the part 1, or robots 68 can be provided in order to enabling the laser shock peening treatment from both sides. The robot(s) 68, in particular their laser beam outlets 70, are relatively movable to the carried part 1 such that every area of the part 1 can be reached by the laser beam in an adequate manner. Examples of the robot movements and rotations are mentioned in figure 2.

Further on, a laser measuring system 64 is shown in Figure 7. The laser measuring system 64 can be moved relatively to the carried part 1 such that that every area of the part 1 can be scanned.

Disclosed is a method for forming shapes and contours at least in a section of a metal part via a shot peening forming treatment, wherein in a closed loop the part can be formed fully automatically, including an overall evaluation of the treated (formed) part and loops for redefining the treatment process, if design requirements are not met after the forming. Before starting the treatment on the real part, a peening forming treatment profile (peening treatment strategy) is established via simulation on a digital twin of the part to be formed. Further disclosed is a working station for executing the method.

### References

- 1: metal part
- 2: working station
- 4: working station
- 6: working station
- 8: working station
- 10: providing metal part to be formed
- 12: defining target geometry
- 20: prediction modelling
- 30: establishing a Peening Strategy
- 40: peening forming treatment on real part
- 50: measuring achieved real geometry
- 52: evaluation of achieved real geometry
- 60: holding device
- 62: peening forming system
- 64: measuring system / metrology system / laser scanner
- 66: mould surface
- 68: robot
- 70: laser beam outlet
- 72: laser light source
- 74: optical cable
- 75: gripper means
- 76: support structure
- 78: gripper means

- x: longitudinal direction of the mould / part
- y: transversal direction of the mould / part
- z: vertical direction of the mould / part

## Claims

1. A method for forming shapes and contours at least in a section of a metal part (1) via a peening forming treatment, comprising the following steps:
a. Providing a metal part (1) to be formed (step 10),
b. Defining a target geometry of the part (1) (step 12);
c. Modelling residual stress profiles and a surface map of the part (1) based on its real geometry and its target geometry (step 20);
d. Defining treatment parameters via a digital twin of the part (1) wherein the residual stress profiles and the surface map are translated into a peening forming treatment profile based on a simulated response of the part (1) on the peening forming treatment (step 30);
e. Executing the peening forming treatment on the real part (1) (step 40);
f. Measuring the achieved real geometry of the formed part (1) (step50) ;
g. Comparing the achieved real geometry of the formed part (1) with its target geometry (step 52), wherein the method restarts at step c) (step 20) if a deviation between the real geometry and the target geometry exceeds a tolerance range.

2. The method according to claim 1, wherein the peening forming treatment is a laser shock peening treatment.

3. The method according to claim 1 or 2, wherein the measuring is done optically.

4. The method according to claim 3, wherein the part (1) to be formed is positioned on a mould (62) with a specific outer contour.

5. The method according to claim 3, wherein the part (1) is positioned in a free-floating manner.

6. The method according to claim 5, wherein the part (1) is treated

7. A working station (2, 4, 6, 8) for forming shapes and contours in
metal part (1) via a peening forming treatment, comprising
• a holding device (60) that is capable of holding the part (1) in a desired position during the treatment;
• a peening forming system (62) that is capable of applying a peening forming treatment to the part (1); and
• a measuring system (64) that is capable of measuring an overall part (1) (1) geometry;
wherein the device (60) and systems (62, 64) are adapted to be moved at least partially relatively to each other such that the part (1) can be formed and its geometry can be measured.

8. The working station (2, 4, 6, 8) according to claim 7, wherein the peening forming system (62) is a robotic laser shock peening system having at least one robot.

9. The working station according (2, 4, 6, 8) to claim 7 or 8, wherein the measuring system (64) is an optical measuring system.

10. The working station (2, 4, 6, 8) according to claim 9, wherein at least one laser beam outlet (70) of the laser shock peening system (62) is movable in two directions, including rotations, laying in one plane and the holding device (60) is fixed.

11. The working station (4, 6, 8) according to claim 9, wherein at least one laser beam outlet (70) of the peening forming system (62) is movable in a first direction, including rotations, and the holding device (60) is movable in a second direction laying in the same plane as the first direction.

12. The working station (2, 4) according to any of claims 6 to 11, wherein the holding device (60) is a mould adapted to carry the part (1) to be formed.

13. The working station (6, 8) according to any of claims 6 to 11, wherein the holding device (60) is adapted to hold the part (1) in a free-floating manner.
